Europäisches Patentamt

European Patent Office

Office européen des brevets

(11) Numéro de publication: **0 478 430 B1**

# (12) FASCICULE DE BREVET EUROPEEN

(45) Date de publication de fascicule du brevet: **22.02.95**  (51) Int. Cl.⁶: **B64C 13/08**, B64C 13/50, B64C 27/82, G05D 1/00

(21) Numéro de dépôt: **91402520.0**

(22) Date de dépôt: **23.09.91**

(54) **Vérin à friction.**

(30) Priorité: **24.09.90 FR 9011740**

(43) Date de publication de la demande:
**01.04.92 Bulletin 92/14**

(45) Mention de la délivrance du brevet:
**22.02.95 Bulletin 95/08**

(84) Etats contractants désignés:
**DE FR GB IT**

(56) Documents cités:
**FR-A- 1 124 904**
**GB-A- 1 023 831**
**US-A- 2 699 833**
**US-A- 2 861 756**
**US-A- 3 378 217**

(73) Titulaire: **SOCIETE DE FABRICATION D'INS-
TRUMENTS DE MESURE (S.F.I.M.)**
**13, avenue Marcel Ramolfo-Garnier**
**F-91344 Massy Cédex (FR)**

(72) Inventeur: **Delattre, Jacques**
**7 Bis, rue du petit Frenneville**
**F-91720 Valpuiseaux (FR)**
Inventeur: **Gouze, Philippe**
**6, bis route de Corbeil**
**F-91360 Villemoisson (FR)**
Inventeur: **Neuvessel,Jacques**
**42 Bd de la Saussaye**
**F-92200 Neuilly S/Seine (FR)**

(74) Mandataire: **Schrimpf, Robert et al**
**Cabinet Regimbeau**
**26, Avenue Kléber**
**F-75116 Paris (FR)**

## Description

La présente invention concerne un vérin, comprenant un moteur à alimentation à courant continu, un réducteur irréversible, et une cinématique de réduction entraînant un arbre de sortie.

L'invention s'applique avantageusement à la commande, en pilotage automatique, du rotor anti-couple d'un hélicoptère pour asservir le cap de l'appareil en lacet.

De manière connue, les commandes de vol de lacet des hélicoptères sont constituées d'une timonerie à bielles reliant le palonnier commandé par le pilote au rotor anti-couple. Dans le cas particulier de la commande de lacet, la timonerie comporte un dispositif de friction qui a pour principale fonction de définir le point d'ancrage, ou point moyen, de la commande comme la dernière position mémorisée de la timonerie à la suite d'une action du pilote sur le palonnier. En mode de pilotage automatique, le maintien du cap de l'hélicoptère est notamment assuré par un vérin parallèle, ou vérin de trim, qui, en plus des éléments énoncés dans le préambule, comprend un embrayage, placé entre le réducteur irréversible et la cinématique de réduction, et des moyens de détection de la position de l'arbre de sortie, lequel est responsable du mouvement appliqué par le vérin à un point non fixe de la timonerie. L'ensemble des organes du vérin est contenu dans un boîtier étanche aux poussières. D'autre part, selon un mode de réalisation connu, la commande de vol de lacet comporte ledit dispositif de friction, placé en parallèle, et un détecteur d'effort, placé en série avec le palonnier.

Lorsque le pilote automatique est mis en fonctionnement, le cap de l'appareil est détecté et est comparé par le calculateur de pilotage automatique à une valeur de consigne. Si la valeur de cap réelle et la valeur de consigne diffèrent, un signal d'erreur est appliqué à l'alimentation du moteur jusqu'à ce que, sous l'action du vérin de trim ainsi mis en oeuvre, l'appareil ait repris la direction de cap prévu.

Du fait de la présence du dispositif de friction, la dernière position de l'arbre de sortie est fixe. Lorsque le pilote de l'hélicoptère désire revenir au mode de pilotage manuel, il exerce sur le palonnier une action détectée par le détecteur d'effort qui, si l'effort est supérieur à un seuil donné $F_B$, coupe l'alimentation de l'embrayage du verin, mettant ainsi hors circuit le pilote automatique. A condition que ledit seuil $F_B$ soit inférieur à la somme de la friction $F_e$ imposée par le dispositif de friction et de la friction non localisée $F_t$ de la timonerie de commande de vol, le pilote retrouve la commande de lacet dans la dernière position où l'avait laissée le vérin de trim avant sa mise hors circuit. D'autre part, étant donné qu'en pilotage manuel, le pilote doit pouvoir vaincre relativement facilement la friction $F_e$, celle-ci doit être inférieure au seuil de confort $F_c$.

Ainsi, $F_e$ doit vérifier la double inégalité :

$$F_B - F_t < F_e < F_c \qquad (1)$$

Compte tenu des techniques classiquement employées de frottement sec de deux pièces l'une sur l'autre, la friction $F_e$ est peu précise et peu fidèle. Aussi doit-elle être souvent réglée de façon que la relation (1) soit toujours satisfaite.

Il convient aussi de souligner un inconvénient majeur des vérins de trim de lacet actuellement connus, qui réside dans le fait qu'en mode de pilotage automatique, le moteur du vérin doit vaincre en permanence le couple résistant induit par la friction au niveau de l'arbre de sortie, d'où la nécessité d'utiliser un moteur plus puissant ou de longévité moindre.

Aussi, un problème technique à résoudre par l'objet de la présente invention est de réaliser un vérin conforme au préambule de la revendication 1 qui, par une configuration avantageuse du dispositif de friction dans la chaîne des organes du vérin, permettrait notamment d'obtenir qu'en mode de pilotage automatique, ladite friction n'exerce pas de résistance au mouvement d'entraînement du moteur, tout en assurant, à la mise hors circuit du pilote automatique et en pilotage manuel, la fonction de définition du point d'ancrage de la commande de vol de lacet comme la dernière position mémorisée du vérin.

La solution au problème technique posé consiste, selon la présente invention, en ce que ledit dispositif de friction est placé entre ledit réducteur irréversible et ladite cinématique de réduction, ledit dispositif de friction étant entraîné à une extrémité par le réducteur irréversible, et entraînant à son tour par son autre extrémité, la cinématique de réduction, le vérin comportant également un dispositif de détection de surpassement de friction destiné à couper l'alimentation du moteur, lorsqu'il détecte, sur l'arbre de sortie, un couple résistant supérieur à un seuil de friction, la friction développée par le dispositif de friction étant, compte tenu de la cinématique de réduction, supérieure aux frictions imposées audit vérin.

Ainsi, comme on le verra en détail plus loin, en mode de pilotage automatique, le dispositif de friction placé en série dans la chaîne du vérin de l'invention, ne présente pas de point fixe et transmet donc sans résistance à l'arbre de sortie, via la cinématique de réduction, le mouvement de rotation du moteur, du moins tant qu'aucun couple résistant supérieur à la friction n'est appliqué à l'arbre de sortie. Lorsque le pilote de l'appareil désire revenir en pilotage manuel, l'action exercée sur le palonnier se traduit au niveau de l'arbre de sortie par un couple résistant supérieur à la friction qui est détecté par ledit dispositif de détection de surpassement de la friction, lequel met alors hors service le vérin en coupant l'alimentation du moteur. L'extrémité du dispositif de friction reliée au réducteur irréversible devient donc un point fixe qui mémorise la dernière position du vérin avant coupure et permet par la suite, en mode de pilotage manuel, de définir le point d'ancrage de façon usuelle comme la dernière action exercée sur le palonnier.

Dans un mode de réalisation particulier du vérin, objet de l'invention, ledit dispositif de détection de surpassement de la friction comporte des contacts détectant le glissement de ladite friction. La précision du déclenchement ainsi obtenue n'est pas critique dans la mesure où il est également prévu que ledit dispositif de détection de surpassement de la friction comporte un détecteur de couple sur ledit arbre de sortie. Quelle que soit la solution retenue, le dispositif de détection de surpassement de la friction, qui assure la même fonction que le détecteur classique d'effort placé en série sur la commande de vol, peut être facilement intégré au vérin. Il en résulte l'avantage tout-à-fait remarquable que non seulement les éléments usuels du vérin de trim, mais aussi la friction et la détection d'effort, peuvent être contenus dans un seul et même boîtier étanche aux poussières.

Enfin, de façon à éviter les réglages fréquents exigés par les dispositifs de friction habituellement utilisés, ledit dispositif de friction est avantageusement un frein à hystérésis en principe inderéglable.

En conclusion, le regroupement des fonctions friction et détection d'effort dans le vérin selon l'invention permet de réduire d'une manière significative la masse de l'ensemble du vérin. Par ailleurs, l'absence de réglage et l'intégration en diminuent fortement les coûts d'achat, d'installation et de maintenance.

La description qui va suivre en regard des dessins annexés, donnés à titre d'exemples non limitatifs, fera bien comprendre en quoi consiste l'invention et comment elle peut être réalisée.

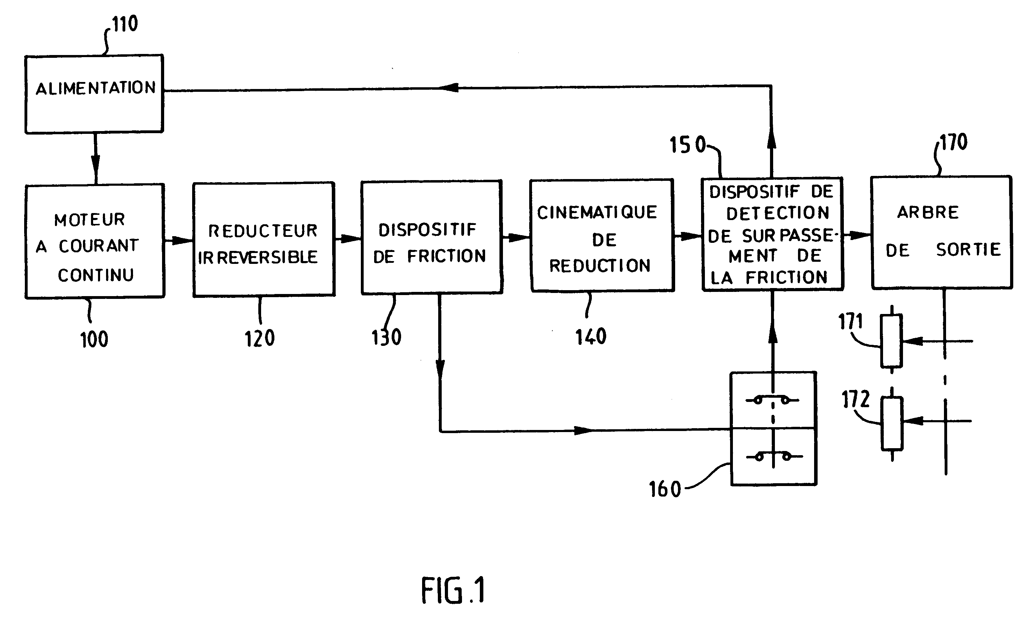

.   La Figure 1 est un schéma synoptique d'un vérin de trim selon l'invention,

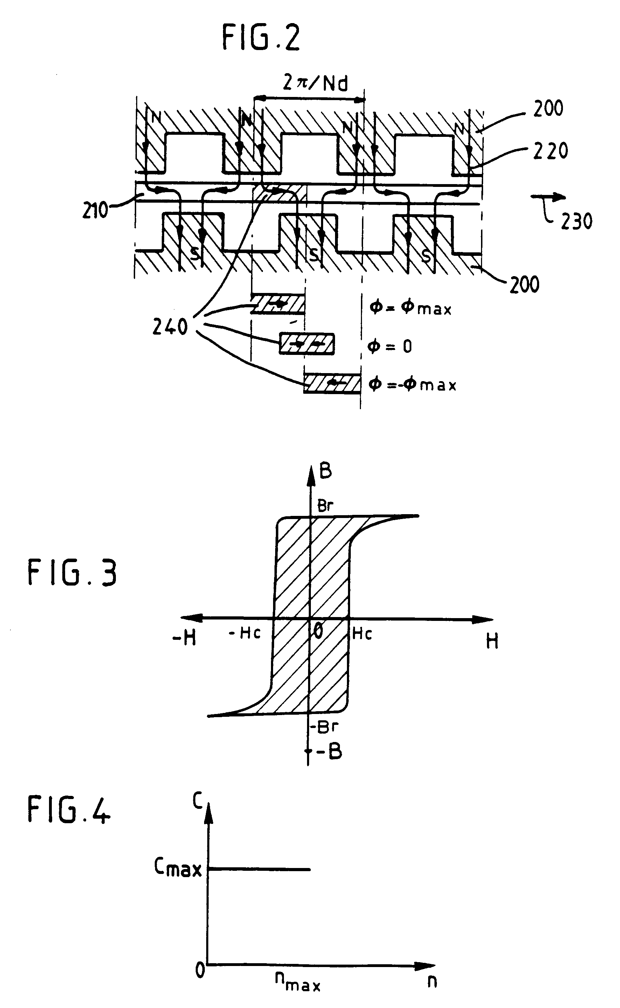

.   la Figure 2 est un schéma de principe d'un frein à hystérésis,

.   la Figure 3 est un diagramme donnant le cycle d'hystérésis d'un frein à hystérésis, et

.   la Figure 4 est un diagramme donnant les variations du couple en fonction de la vitesse pour un frein à hystérésis.

Le schéma de la figure 1 montre un vérin, par exemple un vérin de trim pour commande de vol de lacet d'un hélicoptère, comprenant un moteur 100 alimenté en courant continu par une alimentation 110. En mode de pilotage automatique, le moteur 100 entraîne, par l'intermédiaire d'un réducteur 120 à vis sans fin irréversible, une extrémité d'un dispositif 130 de friction dont l'autre extrémité entraîne à son tour, par l'intermédiaire d'une cinématique 140 de réduction, un arbre 170 de sortie, tant que le couple à entraîner est inférieur au seuil de friction. Ledit arbre 170 de sortie est relié à un point de la timonerie de la commande de lacet (non représentée) et est muni, par exemple, de deux potentiomètres 171, 172 de recopie de position dudit arbre. Ces informations donnant la coordonnée réelle de lacet sont transmises à un calculateur de pilotage automatique qui les compare à des données de consigne afin d'asservir la position de l'arbre de sortie en agissant sur l'alimentation 110 du moteur 100. Comme on peut le constater, le moteur 100 lorsqu'il est actif n'a pas à vaincre la friction. Soumis à un effort résistant moindre, il peut donc avoir une taille réduite ou une longévité accrue.

Pour assurer sa fonction, la friction $F_e$ développée par le dispositif 130 de friction doit, compte tenu de la cinématique 140 de réduction, être supérieure aux frictions imposées au vérin, qui sont ici les frictions non localisées de la commande de vol composées de la friction $F_p$ côté pilote et de la friction $F_t$ de la timonerie :

$$F_e > F_p + F_t$$

Lorsque, à la suite d'une action du pilote sur le palonnier de la commande, le couple appliqué à l'arbre 170 de sortie est supérieur à la friction $F_e$, un dispositif 150 de détection de surpassement de la friction, constitué par un détecteur de couple sur ledit arbre de sortie et relié à des contacts 160 détectant le glissement de la friction, coupe l'alimentation 110 du moteur 100, faisant ainsi passer la commande de vol de lacet en mode de pilotage manuel.

Le moteur 100 étant non alimenté, le point fixe est réalisé par le réducteur 120 à vis sans fin irréversible. La friction présente donc un point fixe à l'une de ses extrémités. Un couple, supérieur au seuil de friction, appliqué sur l'arbre 170 de sortie a pour effet de déplacer le point d'ancrage du palonnier. La dernière position du palonnier, imposée par le pilote, se trouve ainsi fixée.

Avantageusement, le dispositif 130 de friction est un frein à hystérésis dont un schéma est donné à la Figure 2. Un tel frein se compose d'un stator 200 produisant un champ magnétique dans un disque tournant 210 dont les pertes hystérétiques sont élevées. Les lignes de flux 220 sont montrées schématiquement sur la Figure 2.

Pour un déplacement du disque tournant 210, dans le sens indiqué par la flèche 230, correspondant à un pas dentaire du stator 200, chaque zone 240 du disque 210 s'aimante alternativement dans un sens ($\phi = \phi_{max}$) et dans l'autre ($\phi = -\phi_{max}$) et parcourt ainsi le cycle d'hystérésis de la Figure 3, $H_c$ et $B_R$ représentant respectivement le champ coercitif et l'induction rémanente.

L'énergie dissipée par tour dans le disque tournant est constante et indépendante du temps. Ainsi que le montre la Figure 4, le couple C est donc constant et égal à $C_{max}$, et indépendant de la vitesse n jusqu'à la vitesse $n_{max}$.

Les pertes hystérétiques $E_h$ par unité de volume du disque sont égales à la surfac S de la boucle d'hystérésis:

$$E_h = S$$

Le déplacement du disque 210 d'un pas dentaire du stator 200 est égal à :

$$\alpha = 2\pi / N_d$$

où $N_d$ est le nombre de dents du stator 200.

Le couple correspondant à l'unité de volume du disque 210 est :

$$C = E_h/\alpha = N_d S/2\pi$$

Le couple maximal du disque est proportionnel à la surface de son cycle d'hystérésis et à son volume V :

$$C_{max} = N_d SV/2\pi$$

L'invention a été décrite ci-dessus en référence à la commande de lacet d'un hélicoptère, mais il est bien entendu qu'elle s'applique également à tout vérin du type vérin parallèle ou de trim.

## Revendications

1. Vérin comprenant un moteur (100) à alimentation (110) à courant continu qui entraîne, par l'intermédiaire d'un réducteur irréversible (120), et d'une cinématique (140) de réduction, un arbre (170) de sortie, ledit arbre de sortie étant relié à un dispositif (130) de friction pour maintenir l'arbre de sortie dans sa dernière position lorsqu'il n'est pas entraîné par le moteur, caractérisé en ce que ledit dispositif (130) de friction est placé entre ledit réducteur irréversible (120) et ladite cinématique (140) de réduction, ledit dispositif de friction étant entraîné à une extrémité par le réducteur irréversible, et entraînant à son tour par son autre extrémité, la cinématique de réduction (140), le vérin comportant également un dispositif (150) de détection de surpassement de friction destiné à couper l'alimentation (110) du moteur, lorsqu'il détecte, sur l'arbre de sortie, un couple résistant supérieur à un seuil de friction, la friction développée par le dispositif (130) de friction étant, compte tenu de la cinématique (140) de réduction, supérieure aux frictions imposées audit vérin.

2. Vérin selon la revendication 1, caractérisé en ce que ledit dispositif (150) de détection de surpassement de la friction comporte des contacts (160) détectant le glissement de ladite friction.

3. Vérin selon l'une quelconque des revendications 1 ou 2, caractérisé en ce que ledit dispositif (150) de détection de surpassement de la friction comporte un détecteur de couple sur ledit arbre de sortie.

4. Vérin selon l'une quelconque des revendications 1 à 3, caractérisé en ce que ledit dispositif (130) de friction est un frein à hystérésis.

## Claims

1. Actuator comprising a motor (100) and direct current power supply (110), the motor driving an output shaft (170) via a non-reversible gearbox (120) and a speed reducer (140), said output shaft being connected to a friction device (130) to hold the output shaft in its last position when it is not driven by the motor, characterised in that said friction device (130) is between said non-reversible gearbox (120) and said speed reducer (140), said friction device being driven at one end by the non-reversible gearbox and its other end driving the speed reducer (140), the actuator further comprising a friction exceeded sensing device (150) adapted to disconnect the power supply (110) from the motor when it senses a resisting torque on the output shaft greater than a friction threshold, the friction developed by the friction device (130) being greater than the friction applied to said actuator because of the presence of the speed reducer (140).

2. Actuator according to claim 1 characterised in that said friction exceeded sensing device (150) comprises contacts (160) detecting slippage of said friction device.

3. Actuator according to claim 1 or claim 2 characterised in that said friction exceeded sensing device (150) comprises an output shaft torque sensor.

4. Actuator according to any one of claims 1 to 3 characterised in that said friction device (130) is a hysteresis brake.

## Patentansprüche

1. Stellantrieb umfassend einen Motor (100) mit Gleichstromspeisung (110), der über ein unumkehrbares Untersetzungsgetriebe (120) und ein Reduziergetriebe (140) eine Abtriebswelle (170) antreibt, wobei die Abtriebswelle mit einer Reibvorrichtung (130) zum Halten der Abtriebswelle in ihrer letzten Position verbunden ist, wenn die Abtriebswelle nicht von dem Motor angetrieben ist, dadurch **gekennzeichnet**, daß die Reibvorrichtung (130) zwischen dem besagten unumkehrbaren Untersetzungsgetriebe (120) und dem besagten Reduziergetriebe (140) angeordnet ist, wobei die Reibvorrichtung an einem Ende von dem unumkehrbaren Untersetzungsgetriebe angetrieben ist und mit ihrem anderen Ende das Reduziergetriebe (140) antreibt, wobei der Stellantrieb außerdem zum Erfassen einer Reibüberschreitung eine Detektiervorrichtung (150) aufweist, welche dazu bestimmt ist, die Speisung (110) des Motors zu unterbrechen, wenn sie an der Abtriebswelle ein Widerstandsmoment größer als ein Reibschwellenwert erfaßt, wobei die von der Reibvorrichtung (130) entwickelte Reibwirkung aufgrund des Reduziergetriebes (140) größer als die dem Stellantrieb beaufschlagenden Reibwirkungen sind.

2. Stellantrieb nach Anspruch 1, dadurch **gekennzeichnet**, daß die Detektiervorrichtung (150) zum Erfassen der Reibüberschreitung Kontakte (160) aufweist, welche einen Schlupf erfassen.

3. Stellantrieb nach Anspruch 1 oder 2, dadurch **gekennzeichnet**, daß die Detektiervorrichtung (150) zum Erfassen des Überschreitens der Reibung einen Drehmoment-Detektor an der Abtriebswelle umfaßt.

4. Stellantrieb nach einem der Ansprüche 1 bis 3, dadurch **gekennzeichnet**, daß die Friktionsvorrichtung (130) eine mit Hysterese behaftete Bremse ist.

FIG.1

EP 0 478 430 B1

# FIG.2

$2\pi/Nd$

$\phi = \phi_{max}$

$\phi = 0$

$\phi = -\phi_{max}$

# FIG.3

# FIG.4